# FASCICULE DE BREVET EUROPEEN

(11) **EP 1 753 173 B1**
(45) Date de publication et mention de la délivrance du brevet: **03.11.2010**
(21) Numéro de dépôt: 06118541.9
(22) Date de dépôt: 07.08.2006
(51) Int. Cl.: H04L 12/28, H04L 29/06, H04L 29/12

(54) **Contrôle d'accès d'un équipement mobile à un réseau de communication IP par modification dynamique des politiques d'accès**
Zugangskontrolle für ein mobiles Endgerät zu einem IP-basierten Kommunikationsnetz durch dynamische Veränderung der Zugangsregeln
Access control for a mobile equipment to a communication network based on dynamic modification of access policies

(30) Priorité: 10.08.2005 FR 0552484
(43) Date de publication de la demande: 14.02.2007
(73) Titulaire: Alcatel Lucent, 75008 Paris (FR)
(72) Inventeur: Preguica, Christophe, F-78000 Versailles (FR)
(74) Mandataire: Shamsaei Far, Hassan

(56) Documents cités:
- EP-A- 1 330 073
- WO-A-2004/043006
- ACHARYA A ET AL: "ts-PWLAN: a value-add system for providing tiered wireless services in public hot-spots" ICC 2003. 2003 IEEE INTERNATIONAL CONFERENCE ON COMMUNICATIONS. ANCHORAGE, AK, MAY 11 - 15, 2003, IEEE INTERNATIONAL CONFERENCE ON COMMUNICATIONS, NEW YORK, NY : IEEE, US, vol. VOL. 1 OF 5, 11 mai 2003 (2003-05-11), pages 193-197, XP010642741 ISBN: 0-7803-7802-4
- AURA MICROSOFT RESEARCH T: "Cryptographically Generated Addresses (CGA); rfc3972.txt;" IETF STANDARD, INTERNET ENGINEERING TASK FORCE, IETF, CH, mars 2005 (2005-03), XP015009744 ISSN: 0000-0003
- JACOBS GTE LABORATORIES S: "Mobile IP Public Key Based Authentication; draft-jacobs-mobileip-pki- auth-02.txt;" IETF STANDARD-WORKING-DRAFT, INTERNET ENGINEERING TASK FORCE, IETF, CH, no. 2, mars 1999 (1999-03), XP015030375 ISSN: 0000-0004
- ARKKO J ET AL: "SEcure Neighbor Discovery (SEND); rfc3971.txt;" IETF STANDARD, INTERNET ENGINEERING TASK FORCE, IETF, CH, mars 2005 (2005-03), XP015009743 ISSN: 0000-0003

## Description

La présente invention est relative au domaine du contrôle d'accès à un réseau de communication à protocole IP (*Internet Protocol*). Elle s'applique particulièrement bien à l'accès radio à de tels réseaux.

En effet, dans un contexte d'accès radio à un réseau de communication, il n'y a pas de connexion prédéterminée entre les équipements d'accès et les « hôtes » (pour « host » en langue anglaise). Ces hôtes sont des équipements mobiles ayant la capacité de communiquer avec un réseau selon le protocole IP. Il peut notamment s'agir de terminaux tels des terminaux mobiles de communication de type GSM, UMTS, CDMA etc. d'ordinateurs portables, d'assistants personnels numériques (ou PDA pour « *Personal Digital Assistant* ») etc.

Du fait de la mobilité des hôtes (et éventuellement des équipements d'accès), ceux-ci ne peuvent être associés de façon définitive à un équipement d'accès comme cela est habituellement le cas dans un réseau de communication fixe. Un nouvel hôte ou un hôte qui s'est déplacé dans la zone de couverture d'un équipement d'accès, doit donc se connecter dynamiquement à cet équipement d'accès.

Cette connexion dynamique engendre différents types de problèmes liés au contrôle d'accès.

Cette exigence de contrôle d'accès est nécessaire dans différents contextes. Par exemple, il est souhaitable d'éviter qu'un visiteur d'une entreprise muni d'un équipement mobile puisse accéder librement au réseau local de celle-ci. Il est aussi important d'éviter qu'un tiers mal-intentionné puisse se connecter à un réseau de communication pour accéder à des informations sensibles ou nuire à l'intégrité du réseau.

Ainsi, du point de vue de l'équipement d'accès, il faut s'assurer de l'identité de l'hôte afin de déterminer s'il peut effectivement se connecter au réseau de communication, et le cas échéant quels seront ses droits dans ce réseau. Inversement, l'hôte doit aussi s'assurer de l'identité de l'équipement d'accès auquel il désire se connecter.

Le document P802.1X promu par l'IEEE propose une solution de contrôle d'accès intitulée *« Draft Standard for Port* Based *Network* Access *Control* ». Il définit un mécanisme utilisant les caractéristiques d'accès physique des infrastructures de réseaux locaux ou LAN (pour « *Local-Area Network »* en langue anglaise) définies par les standards de la famille IEEE 802. Il permet ainsi d'authentifier les hôtes attachés à un port LAN en mode « point à point » et d'empêcher les accès et transmission sur ce port si l'authentification n'est pas assurée.

Toutefois ce mécanisme présente de nombreux désavantages.

Tout d'abord, il s'intéresse aux ports des équipements et se situe donc au deuxième niveau du modèle en couches OSI (*Open System Interconnect*) promu par l'ISO (*International Standards Organization).* Ce deuxième niveau, nommé « Liaison de données » (« *Data Link Layer* » en langue anglaise) couvre l'interface des équipements qui doivent communiquer. Cette couche dépend de la technologie mise en oeuvre pour l'établissement de cette liaison.

Or, nous avons vu qu'un hôte et un équipement d'accès pouvaient être reliés par différentes technologies. Sans prétendre établir une liste exhaustive, on peut citer les normes de téléphonie mobile comme GSM, UMTS, mais aussi WiFi, Ethernet, Blue Tooth, Wimax...

La norme WiFI définie par les normes IEEE 802.11, la technologie « *Bluetooth* » définie par les normes IEEE 802.15, la technologie WiMAX (« *Worldwide Interoperability* for Microwave ACCess ») définie par la norme IEEE 802.13, par exemples, possèdent toutes des techniques de liaison de donnée différentes. Et même, au sein d'une même famille de technologies, plusieurs versions peuvent co-exister entraînant des techniques de liaison de données différentes.

Aussi, le mécanisme P802.1X présente l'important inconvénient de nécessiter autant d'implémentations que de technologies supportées par le système. Cela engendre bien entendu une augmentation substantielle du coût du système, ainsi qu'une utilisation accrue des ressources disponibles.

Un second inconvénient est qu'il nécessite un serveur d'authentification dédié. Ce serveur, appelé « *authentication server* » peut communiquer avec l'équipement d'accès par le protocole AAA (« Authentication Authorization Accounting ») défini par le RFC 2906 de l'IETF. Il peut alternativement s'agir d'un serveur RADIUS (« *Remote Authentication Dial In* User *Service »*) défini par le RFC 2865 de l'IETF.

Là encore, la présence indispensable d'un serveur dédié rend le système très coûteux, surtout dans un milieu hétérogène, puisque la nature des informations nécessaires à l'authentification est différente selon chacun des types de serveurs.

EP1330073-A, qui fonde le préambule de la revendication 1, décrit un point d'accès comportant un contrôleur d'accès pour relayer des information d'authentification de couche protocolaire 2 ou 3 entre un terminal radio et un serveur d'authentification distant.

Jacobs GTE Laboratories, Mobile IP Public Key Based Authentication, IETF Standard working draft, no. 2, mars 1999, XP015030375, décrit une extension du protocole Mobile IP pour permettre à des hôtes mobiles et des agents de mobilité (home agent, foreign agent) d'utiliser des certificats X.509, des clés publiques et des signatures numériques comme base pour authentifier des messages de contrôle du protocole Mobile IP. Dans ce protocole, un hôte mobile doit avoir une adresse permanente « home adress » enregistrée auprès d'un agent « home agent » et qui permet aux agents « foreign agent » d'identifier l'hôte mobile.

L'invention a pour but de résoudre ces différents problèmes techniques. Elle a pour objet un équipement d'accès à un réseau de communication, pourvu d'une interface de radio-communication apte à échanger des paquets de données avec des hôtes mobiles situés dans une zone géographique associée à cette interface, des moyens de négociation prévus pour établir un échange de paquets de données avec un hôte mobile de la zone géographique sollicitant l'accès audit réseau de communication, et des moyens de transmission pour transmettre des paquets de données formant un flux de données, entre un ou plusieurs équipements distants situés dans le réseau de communication et les hôtes mobiles enregistrés dans une liste d'hôtes mobiles autorisés mémorisée dans l'équipement d'accès, les moyens de transmission ne transmettant aucun paquet de données de ou vers les hôtes mobiles non enregistrés dans la liste d'hôtes mobiles autorisés.

L'équipement d'accès de l'invention se caractérise en ce que les moyens de négociation comportent des moyens de contrôle prévus pour authentifier l'hôte mobile à partir de l'échange de paquets de données et pour modifier la liste d'hôtes mobiles autorisés en fonction de cette authentification, conformément à la revendication 1.

Selon les mises en oeuvre de l'invention, celle-ci peut comporter une ou plusieurs des caractéristiques suivantes :
- la liste d'hôtes mobiles autorisés est une base de type ACL (pour *« Access Control List »* en langue anglaise),
- les moyens de négociations transmettent un message d'annonce à l'hôte mobile contenant le statut de l'authentification,
- l'échange de paquets de données comporte un message de sollicitation contenant un certificat contenant des informations nécessaires et suffisantes pour permettre l'authentification,
- les moyens de contrôle sont prévus pour accéder à la clé publique d'un tiers de confiance, ces informations nécessaires et suffisantes pour permettre l'authentification comprenant des informations réduites cryptées par la clé privée du tiers de confiance.

Par ailleurs, l'invention a également pour objet un procédé pour contrôler l'accès d'hôtes mobiles à un réseau de communication à travers un équipement d'accès pourvu d'une interface de radio-communication apte à échanger des paquets de données avec un des hôtes mobiles lorsque celui-ci est situé dans une zone géographique associée à l'équipement d'accès.

Le procédé comporte une étape d'échange de paquets de données entre ledit équipement d'accès et les hôtes mobiles et une étape de transmission consistant à transmettre par l'équipement d'accès des paquets de données formant flux de données entre un ou plusieurs équipements distants situé dans le réseau de communication et les hôtes mobiles si et seulement si ceux-ci ont été préalablement enregistrés dans une liste d'hôtes mobiles autorisés mémorisée dans l'équipement d'accès.

Ce procédé se caractérise en ce que, préalablement à l'étape de transmission, l'équipement d'accès procède à l'authentification de chaque hôte mobile sollicitant l'accès au réseau de communication, à partir de cet échange de paquets de données, et modifie la liste d'hôtes mobiles autorisés en fonction de cette authentification, conformément à la revendication 9.

L'invention et ses avantages apparaîtront de façon plus claire dans la description qui va suivre, en liaison avec les figures annexées.

La figure 1 représente le contexte dans lequel s'inscrit la présente invention.

La figure 2 est un schéma fonctionnel d'un équipement d'accès selon l'invention.

La figure 3 illustre l'échange de paquets de données entre un hôte mobile et un équipement d'accès selon l'invention.

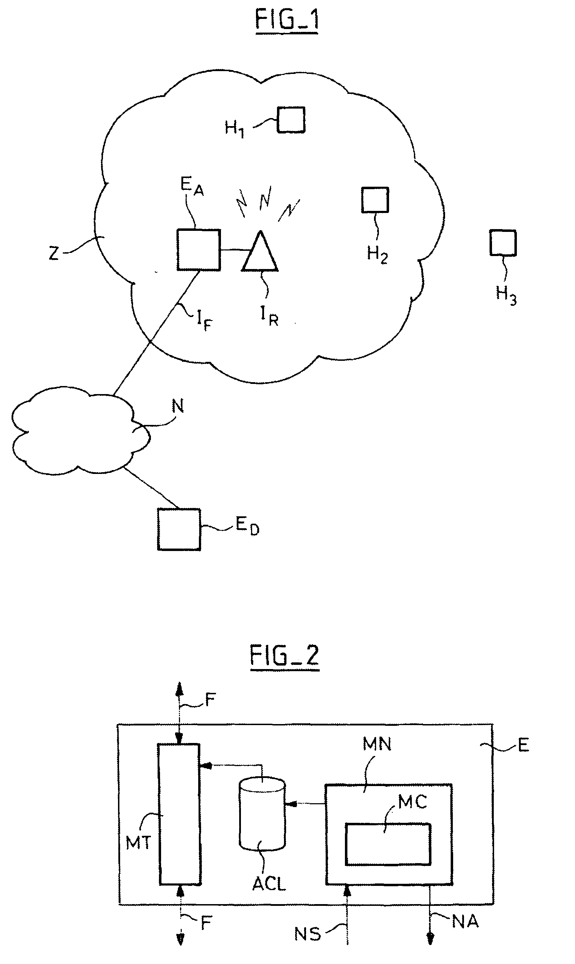

Ainsi que représentée par la figure 1, l'équipement d'accès E_{A} possède une interface radio I_{R}. Cette interface est associée à une zone géographique Z (également appelée « couverture ») dont les caractéristiques techniques correspondent au type de technologie mis en oeuvre.

Il peut s'agir de quelques dizaines de mètres pour une interface radio Bluetooth^{™}, quelques centaines de mètres avec WiFi ou même plusieurs kilomètres avec une interface radio WiMAX.

Cette zone géographique Z a été représentée sur la figure 1 comme approximativement circulaire, mais dans la réalité cette zone est plus ou moins dépendante des obstacles du terrain.

Il est à noter également qu'un même équipement d'accès E_{A} peut éventuellement posséder plusieurs interfaces radio afin de pouvoir transmettre selon plusieurs technologies de radio-communication.

L'équipement d'accès E_{A} possède par ailleurs une interface filaire I_{F} avec un réseau de communication fixe N auquel est relié un ou plusieurs équipements distants E_{D}.

Des hôtes mobiles H₁, H₂, H₃ peuvent évoluer dans l'espace et, à un moment donné, être dans la zone Z associée à l'interface radio I_{R} de l'équipement d'accès E_{A}. Comme évoqué précédemment, ces hôtes mobiles peuvent être des terminaux mobiles de radiocommunication, des assistants personnels numériques (PDA pour « *Personnal Digital Assistant »*), des ordinateurs portables munis d'une interface radio, etc.

Dans l'exemple de la figure 1, les hôtes mobiles H₁ et H₂ sont dans cette zone géographique Z. L'hôte mobile H₃ est situé en dehors de cette zone géographie Z et ne peut donc pas physiquement communiquer avec l'équipement d'accès E_{A}.

Lorsqu'un hôte mobile est dans la zone géographique Z, il est en mesure de solliciter t'accès au réseau de communication N, notamment afin de communiquer avec un équipement distant E_{D}. Cet équipement distant E_{D} peut être un hôte avec lequel il souhaite échanger des informations (une communication téléphonique ou vidéo, par exemple). Il peut aussi s'agir d'un serveur vidéo, ou bien d'une passerelle vers un autre réseau (non représenté sur la figure).

Les paquets de données qui sont échangés entre les hôtes mobiles et l'équipement d'accès E_{A} peuvent être conformes au protocole IP et préférentiellement au protocole IPv6 (« *Internet Protocol ― version 6* »). Dans ce cas, l'équipement d'accès E_{A} inclut un routeur de paquets IP.

Il est connu en soi de disposer à l'intérieur d'un équipement d'accès, une liste d'hôtes autorisés. Selon l'invention, cette liste répond préférentiellement à la technologie ACL («*Access Control List»* selon la terminologie en langue anglaise, ou « Liste de contrôle d'accès »). Il s'agit d'une liste d'identificateurs des hôtes autorisés à se connecter à un équipement. Cette technologie n'a pas fait l'objet de travaux de normalisation, mais est largement utilisée par les constructeurs d'équipements.

La sollicitation d'accès au réseau de communication N est effectuée par un échange de paquets de données entre l'hôte mobile H₁, H₂ sollicitant l'accès et l'équipement d'accès E_{A} au réseau de communication N.

Lorsque la sollicitation d'accès débouche, l'hôte mobile est ajouté dans une liste des hôtes mobiles autorisés, mémorisée à l'intérieur de l'équipement d'accès E_{A}.

L'équipement d'accès E_{A} peut alors transmettre des flux de données entre ces deux parties.

Ces flux de données se présentent sous la forme d'ensemble de paquets de données. Ils peuvent être unidirectionnels ou bidirectionnels.

Les paquets de données appartenant à un flux de données contiennent une adresse source et une adresse destination permettant leur acheminement à travers le réseau de communication N. Ces informations sont contenues dans un entête clairement distinct des données utiles véhiculées par le paquet.

La figure 2 montre de façon plus détaillée une architecture fonctionnelle possible de l'équipement d'accès E_{A}.

Il dispose de moyens de transmission MT prévus pour transmettre les flux de données F entre le réseau de communication et l'hôte mobile (non représentés). Cette transmission peut avoir lieu dans les deux sens, comme évoqué précédemment.

Ces moyens de transmission MT transmettent effectivement les flux de données à condition que l'hôte mobile ait été préalablement authentifié.

Une liste d'hôtes mobiles autorisés ACL est donc prévue dans l'équipement d'accès E_{A}. Aussi, si un hôte mobile n'appartient pas à la liste ACL, les moyens de transmission MT ne transmettront aucun flux de paquets de et vers celui-ci. Il sera alors complètement déconnecté du réseau de communication. Au contraire, si l'hôte mobile appartient à la liste ACL, alors la transmission des flux de données F est possible.

Selon l'invention, cette liste des hôtes mobiles autorisés ACL est initialement vide. Dans cet état, aucun hôte mobile n'est en mesure de transmettre des flux de données avec le réseau de communication.

Chaque hôte mobile sollicitant un accès au réseau de communication effectue un échange de paquets de données NS, NA avec des moyens de négociation MN contenus dans l'équipement d'accès E_{A}.

Grâce à cet échange, l'hôte mobile transmet aux moyens de négociation MN des informations qui permettent à l'équipement d'accès E_{A} de l'authentifier.

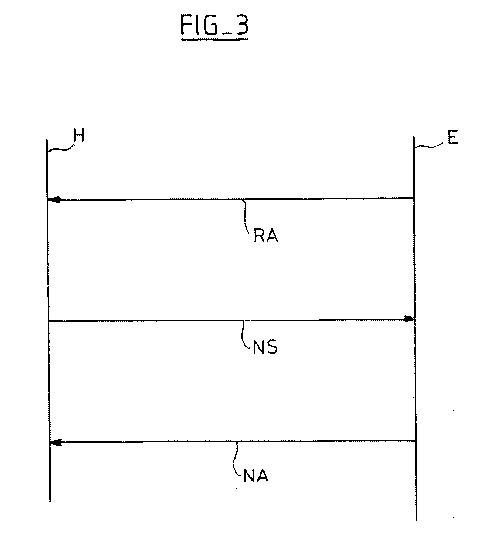

L'échange en question est illustré par la figure 3 sous la forme de chronogramme vertical. Le temps est orienté du haut vers le bas, et les flèches indiquent la direction de la transmission des différents messages transmis entre un hôte mobile H (à gauche) et l'équipement d'accès E_{A} (à droite).

Dans une première étape, l'équipement d'accès transmet un message RA à l'hôte H. Ce message d'annonce RA est une annonce de routeur (« *Router Advertisment* ») qui permet à un équipement conforme au protocole IP d'annoncer son existence à son environnement. C'est grâce à la transmission périodique et en mode multicast de ce message d'annonce RA que l'hôte mobile peut être informé de la présence d'un équipement d'accès E_{A} dans son voisinage (ou plutôt, qu'il est dans la zone géographique Z associée à un équipement d'accès E_{A}). Le message d'annonce RA contient notamment une liste d'un ou plusieurs préfixes de sous-réseau annoncés par le routeur de l'équipement d'accès E_{A}.

Le format et le type d'information transmis dans les messages d'annonce RA sont définis dans le RCF 2461 de l'IETF, intitulé « *Neighbor Discovery* for *IP Version 6 (IPv6).* » qui décrit le protocole NDP (« *Neighbor Discovery* Protocol ».)

L'hôte mobile H transmet alors un message de sollicitation NS (« *Neighbor Solicitation* »). Un tel message est conforme au RFC 2461 précédemment évoqué.

Aussi, le format des informations contenues respecte le standard ICMPv6 , c'est-à-dire selon un formalisme TLV, « Type, Length, Value ».

Le message de sollicitation NS comporte un entête et éventuellement un ensemble d'options. Cette entête est une entête propre au protocole NDP, qui est donc distinct de l'entête IP qui débute tout paquet IP. Cette entête NDP comporte
- un champ « type » valant « 135 » pour un message de sollicitation NS du type « *Neighbor Solicitation* Message ».
- un champ « Code » valant « 0 »
- un champ « checksum », conforme au standard ICMPv6, et permettant de contrôler l'intégrité du contenu du message de sollicitation.
- Un champ « Reserved », non utilisé par ce type de messages.
- Un champ « target address » indiquant l'adresse IP du destinataire du message de sollicitation. Il s'agit ici de l'adresse IP de l'équipement d'accès E_{A} qui est connue de l'hôte H grâce au message d'annonce RA reçu de celui-ci.
- Éventuellement un ou plusieurs champs « Options ».

Différentes options ont été définies. L'option « Source Link-layer address » a été définie dans ce RFC 2461.

Le RFC 3971 intitulé *« Secure Neighbor Discovery (SEND)* » définit d'autres options, notamment :
- « CGA option »
- « RSA signature option ».

La méthode de cryptage RSA (pour Rivest, Shamir et Adleman, les noms des inventeurs) se caractérise par le fait qu'une clé différente est utilisée pour le décryptage et pour le cryptage. Cette méthode permet donc d'utiliser une clé « publique » pour le cryptage et une clé « privée » pour le décryptage. Comme expliqué en détail dans le RFC 3971, l'hôte H utilise sa propre clé privé pour crypter un ensemble de données (adresses IP, entêtes du message de sollicitation etc.) et ainsi former sa « signature ». Cette signature est insérée dans le champ « RSA signature option » en dernier dans la construction du message.

Le champ « CGA option » contient la structure de données des paramètres CGA telle que définie dans le RFC 3972, à savoir notamment un nombre générateur, le préfixe de sous-réseau de l'adresse IPv6 de l'hôte mobile H, un compteur de collisions et la clé publique utilisée pour engendrer l'adresse IPv6 de manière cryptographique selon la procédure CGA. La procédure CGA permet à l'hôte mobile H de produire l'identifiant d'interface de son adresse IPv6 en appliquant une fonction de hachage cryptographique à une clé publique appartenant à l'hôte.

Selon l'invention, une option « Certificats » est ajoutée dans les messages de sollicitation NS.

Elle permet à l'hôte H de transmettre aux moyens de négociation MN de l'équipement d'accès E_{A} des informations lui permettant de l'authentifier.

Ce certificat peut inclure un identificateur de l'hôte H, signé par un tiers de confiance. Il peut contenir son adresse IP, par exemple.

Ce certificat peut être conforme à la recommandation X.509 de l'ITU-T *(International Telecommunication Union),* intitulée « *Information technology* ― *Open systems intectionnection ― The Directory: Public-Key and attribute* certificate *frameworks »* et se baser sur les travaux de l'IETF (*Internet Engineering* Task Force) pour adapter cette recommandation pour les protocoles de la pile IP. Ces travaux se sont concrétisés par plusieurs RFC et « Internet drafts » et sont notamment regroupés dans le groupe de travail PKIX (pour *« Public-Key Infrastructure* (X.509) ») établi à l'automne 1995. Le premier des documents normatifs définis par le groupe de travail PKIX est le RFC 2459 intitulé « *Public Key Infrastructure Certificate and* CRL Profiles »

Ce certificat est préférentiellement signé en utilisant la clé privée du tiers de confiance (ou CA pour « *Certificate Authority* », en langue anglaise) associé à l'hôte mobile H. Typiquement, un algorithme est appliqué au certificat pour fournir une information réduite. Cette information réduite peut alors être cryptée par cette clé privée du tiers de confiance puis l'information réduite et l'information réduite cryptée sont attachées au certificat, dans l'option « Certificat », avant d'être envoyées dans le message de sollicitation NS.

Par exemple, l'hôte mobile H transmet dans l'option « Certificats » du message de sollicitation NS au moins un certificat incluant le numéro de série du certificat, le nom de l'autorité de certification ayant émis le certificat, la date limite de validité du certificat, le nom du propriétaire du certificat (pouvant être une personne physique ou morale), la clé publique du propriétaire du certificat, la désignation d'un algorithme de signature utilisé par l'autorité de certification et au moins une signature numérique de l'autorité de certification. Un certificat peut également porter plusieurs signatures numériques de plusieurs autorités des certification, par exemple organisées de manière hiérarchique ou arborescente. Plusieurs certificats selon ce format ou des formats voisins peuvent également être transmis dans un même message de sollicitation NS, de manière à désigner plusieurs autorités de certification.

À la réception du message de sollicitation NS, les moyens de contrôle MC peuvent vérifier le contenu de celui-ci. Notamment, ils peuvent vérifier si les options « CGA option » et « RSA signature option » sont conformes aux requis du protocole SEND défini par le RFC 3971. Lorsque l'option « CGA option » est utilisée, les moyens de contrôle MC procèdent à la vérification de l'association entre l'adresse IPv6 de l'hôte H et sa clé publique. La procédure de vérification est décrite dans le RFC 3972.

En outre, les moyens de négociation MN vérifient le certificat ou les certificats contenus dans l'option « Certificats », au moyen de moyens de contrôle MC.

Pour cela, l'équipement d'accès E_{A} dispose d'une liste de tiers de confiance, pouvant par exemple être configurée par l'administrateur du réseau, définissant les émetteurs de certificats acceptés par l'équipement d'accès E_{A}. Dans l'option « Certificats » du message de sollicitation reçu, les moyens de contrôle MC recherchent un certificat émis par une autorité de certification figurant dans la liste des tiers de confiance. S'il en existe, cela signifie qu'une autorité de certification est reconnue à la fois par l'hôte H et par l'équipement d'accès E_{A}. L'existence de ce tiers de confiance commun est indispensable à la poursuite de la procédure d'accès. Le certificat correspondant est alors lu pour extraire la clé publique de l'hôte mobile. Cette clé publique est utilisée par les moyens de contrôle MC pour vérifier la signature numérique jointe dans l'option « RSA signature option », lorsque cette option est utilisée.

Dans la situation où l'option « Certificats » est signée comme évoqué précédemment, les moyens de contrôle MC utilisent la clé publique du tiers de confiance afin de décrypter l'information réduite cryptée pour vérifier la validité du certificat. Le résultat du décryptage de l'information réduite cryptée doit normalement donner l'information réduite, telle qu'également transmise dans l'option « Certificat ».

Si cela est effectivement le cas, les moyens de contrôle MC peuvent être assurés que le certificat a été signé par ce tiers de confiance. Le message de sollicitation NS est alors authentifié. Dans le cas contraire, il n'est pas authentifié et doit être rejeté.

Afin de décrypter l'information réduite cryptée, les moyens de contrôle MC doivent avoir accès à la clé publique du tiers de confiance utilisé par l'hôte mobile H. Cette clé publique peut être d'ores et déjà à disposition des moyens de contrôle MC. Il peut aussi avoir à accéder à une base de données des tiers de confiance, accessible sur le réseau de communication N.

Différents modes de réalisation sont alors possibles en fonction de l'infrastructure à clé publique (ou PKI pour « *Public Key Infrastructure* ») mise en oeuvre. Les travaux du groupe de travail PKIX laissent en effet beaucoup de possibilités et à l'heure actuelle aucune infrastructure possible ne l'emporte véritablement sur les autres.

Aussi, l'invention ne saurait être réduite à l'une ou l'autre de ces infrastructures PKI, ni aux exemples donnés ci-dessus.

De préférence, les options « RSA signature option », « CGA option » et « Certificats » sont utilisées de manière combinée pour l'authentification de l'hôte H. Ainsi, le certificat permet de connaître le nom du propriétaire authentique de la paire de clés publique et privée. La signature numérique permet de vérifier que le message de sollicitation NS a bien été envoyé par le propriétaire de la paire de clés, qui est normalement le seul à connaître la clé privée. L'adresse cryptographique permet de vérifier que le propriétaire de cette adresse IP est le propriétaire authentique de la clé publique. La combinaison de ces vérifications établit une relation sûre entre la personne nommée dans le certificat et l'adresse IP du terminal mobile.

Selon les options utilisées dans le message de sollicitation NS, il existe plusieurs situations pouvant conduire à l'échec de l'authentification et au rejet de l'hôte H. Ainsi, avec les trois options combinées, l'authentification échoue dès que l'une quelconque des conditions ci-dessous est détectée par moyens de contrôle MC :
- le certificat n'est pas reconnu car il n'est pas émis par un tiers de confiance ;
- le certificat est reconnu mais il n'est pas valide ;
- la vérification de la signature numérique de l'hôte H échoue;
- la vérification de l'association entre l'adresse IPv6 de l'hôte H et sa clé publique échoue.

Dans une mise en oeuvre particulière de l'invention, une fois l'hôte mobile H authentifié, les moyens de contrôle MC peuvent vérifier les droits d'accès de l'hôte mobile H.

En effet, un hôte mobile H peut être authentifié mais ne pas pour autant se voir accéder l'ensemble des droits d'accès. Dans certains cas, son authentification peut entraîner un rejet de sa sollicitation. C'est le cas s'il a été mis dans une « liste noire » par exemple (ou « *blacklist* » en anglais). Il peut aussi ne se voir concéder que des droits d'accès limités (à une partie du réseau, à une partie des services disponibles sur le réseau, etc.).

Si les moyens de contrôle MC authentifient l'hôte H comme pouvant accéder au réseau de communication, il modifie alors la liste des hôtes mobiles autorisés. Cette modification peu consister à ajouter l'adresse IP de l'hôte H dans la base ACL. Ainsi, chaque paquet reçu par les moyens de transmission MT ayant cette adresse IP comme adresse source sera transmis vers le réseau de communication et chaque paquet ayant cette adresse IP comme adresse de destination sera transmis par les moyens de transmission MT à destination de l'hôte H.

En outre, préférentiellement, les moyens de négociation MN renvoient un message d'annonce NA vers l'hôte mobile H pour l'informer du statut de sa sollicitation.

Ce message d'annonce NA peut être du type « Neighbor Solicitation » tel que défini dans le RFC 2461 de l'IETF (paragraphe 4.4). Ce message d'annonce « Neighbor Advertisement » possède un format similaire à celui du message de sollicitation NS « Neighbor Solicitation » décrit précédemment.

Une option supplémentaire *« Policy* Notification Option » peut être utilisée pour transmettre un statut de la sollicitation transmise par le message de sollicitation NS.

Cette option peut par exemple prendre trois valeurs :
- « 0 », si le certificat est accepté par l'équipement d'accès E_{A} et que l'accès au réseau est accordé.
- « 1 », si le certificat n'a pas pu être évalué par l'équipement d'accès E_{A}, par exemple parce qu'il est de type inconnu.
- « 2 », si l'accès est refusé par l'équipement d'accès E_{A}.

De cette façon, à la réception du message d'annonce NA, l'hôte H est informé de s'il doit transmettre un nouveau certificat (cas où l'option vaut « 1 ») ou bien si ses paquets seront transmis par l'équipement d'accès ou non. En fonction de cela, il peut opter pour le choix d'un autre équipement d'accès dont il serait dans la zone géographique Z, ou bien informer l'utilisateur qu'il ne peut accéder au réseau de communication.

En utilisant le protocole SEND, l'équipement d'accès E_{A} peut aussi utiliser un message d'annonce NA (« *Neighbor Advertisement* ») pour transmettre les informations permettant à l'hôte H d'authentifier l'équipement d'accès E_{A}. Par exemple, les options « RSA signature option » et « CGA option » peuvent être utilisées de manière similaire dans l'autre sens. Ainsi, le protocole SEND peut être utilisé dans les deux sens, pour l'authentification mutuelle de l'équipement d'accès E_{A} et de l'hôte mobile H.

Les moyens de négociation et les moyens de contrôle peuvent être implantés à l'aide de composants matériels, de composants logiciels ou de composants matériels et logiciels. Les moyens de négociation et les moyens de contrôle peuvent être avantageusement implantés au moyen d'au moins un programme logiciel, par exemple C, C++ ou Java, exécuté par au moins un composant matériel et réalisant les fonctions énoncées. Cette liste de langage de programmation est illustrative et non exhaustive. Les moyens de négociation et les moyens de contrôle peuvent être implantés de manière centralisée ou de manière distribuée, à savoir à l'aide de plusieurs éléments matériels coopérant pour réaliser les fonctions énoncées. Un composant matériel approprié inclut des moyens tels qu'un circuit intégré spécifique à une application (ASIC), un réseau logique programmable (FPGA) et/ou un microprocesseur.

## Revendications

1. Équipement d'accès (E_{A}) à un réseau de communication (N), pourvu d'une interface de radio-communication (I_{R}) apte à échanger des paquets de données avec des hôtes mobiles (H₁, H₂, H₃) situés dans une zone géographique (Z) associée à ladite interface (I_{R}), des moyens de négociation (MN) prévus pour établir un échange de paquets de données (RA, NS, NA) avec un hôte mobile de ladite zone géographique sollicitant l'accès audit réseau de communication, et des moyens de transmission (MT) pour transmettre des paquets de données formant un flux de données (F), entre un ou plusieurs équipements distants (E_{D}) situés dans ledit réseau de communication et les hôtes mobiles enregistrés dans une liste d'hôtes mobiles autorisés (ACL) mémorisée dans ledit équipement d'accès, lesdits moyens de transmission ne transmettant aucun paquet de données de ou vers les hôtes mobiles non enregistrés dans ladite liste d'hôtes mobiles autorisés, lesdits moyens de négociation comportant des moyens de contrôle (MC) aptes à modifier ladite liste d'hôtes mobiles autorisés en fonction d'une authentification dudit hôte mobile, **caractérisé en ce que** lesdits moyens de négociation sont aptes à transmettre un message d'annonce (RA) audit hôte mobile, ledit message d'annonce contenant au moins un préfixe de sous-réseau, à recevoir dudit hôte mobile un message de sollicitation (NS) contenant une signature numérique obtenue à l'aide d'une clé privée associée à une clé publique, une adresse IP de l'hôte mobile générée à partir de ladite clé publique et dudit préfixe de sous-réseau, et un certificat signé par au moins une autorité de certification, ledit certificat incluant ladite clé publique et un nom de propriétaire de la paire de clés publique et privée, lesdits moyens de contrôle (MC) étant aptes à vérifier la signature numérique de l'autorité de certification, puis à vérifier la signature numérique et l'adresse IP de l'hôte mobile à l'aide de la clé publique reçue dans le certificat pour authentifier ledit hôte mobile.

2. Équipement d'accès selon la revendication précédente, dans lequel ladite liste d'hôtes mobiles autorisés est une base de type ACL.

3. Équipement d'accès selon la revendication 1 ou 2, dans lequel lesdits moyens de négociations sont aptes à transmettre un message d'annonce (NA) audit hôte mobile contenant le statut de ladite authentification.

4. Équipement d'accès selon la revendication 3, dans lequel le statut de l'authentification contenu dans le message d'annonce présente une première valeur si le certificat est accepté par l'équipement d'accès, une deuxième valeur si le certificat n'a pas pu être évalué par l'équipement d'accès et une troisième valeur si le certificat est refusé par l'équipement d'accès.

5. Équipement d'accès selon l'une des revendications 1 à 4, dans lequel ledit message de sollicitation comprend des informations réduites cryptées par la clé privée de ladite autorité de certification et lesdites informations réduites non cryptées, lesdits moyens de contrôle étant aptes à utiliser la clé publique de ladite autorité de certification pour décrypter les informations réduites cryptées et à comparer les informations réduites décryptées auxdites informations réduites non cryptées.

6. Équipement d'accès selon l'une des revendications 1 à 5, dans lequel lesdits moyens de contrôle (MC) sont aptes à déterminer si ladite au moins une autorité de certification signataire dudit certificat est un tiers de confiance reconnu par ledit équipement d'accès, et à refuser ladite authentification dans la négative.

7. Équipement d'accès selon l'une des revendications 1 à 6, dans lequel ladite adresse IP est obtenue par la procédure CGA selon le RFC 3972.

8. Équipement d'accès selon l'une des revendications 1 à 7 pour un réseau IP version 6, dans lequel lesdits messages sont conformes au standard ICMPv6.

9. Procédé pour contrôler l'accès d'hôtes mobiles (H₁, H₂, H₃) à un réseau de communication (N) à travers un équipement d'accès (E_{A}) pourvu d'une interface de radio-communication (I_{R}) apte à échanger des paquets de données avec un desdits hôtes mobiles lorsque celui-ci est situé dans une zone géographique (Z) associée audit équipement d'accès (E_{A}), ledit procédé comportant une étape d'échange de paquets de données (RA, NS, NA) entre ledit équipement d'accès et un hôte mobile sollicitant l'accès au réseau de communication, une étape d'authentification dudit hôte mobile, une étape de modification, en fonction de cette authentification, d'une liste d'hôtes mobiles autorisés mémorisée dans ledit équipement d'accès et une étape de transmission consistant à transmettre des paquets de données formant flux de données (F) par ledit équipement d'accès entre un ou plusieurs équipements distants (E_{D}) situé dans ledit réseau de communication et lesdits hôtes mobiles si et seulement si ceux-ci ont été préalablement enregistrés dans ladite liste d'hôtes mobiles autorisés (ACL), **caractérisé en ce que**, préalablement à ladite étape de transmission, l'équipement d'accès transmet un message d'annonce (RA) audit hôte mobile, ledit message d'annonce contenant au moins un préfixe de sous-réseau, reçoit dudit hôte mobile un message de sollicitation (NS) contenant une signature numérique obtenue à l'aide d'une clé privée associée à une clé publique, une adresse IP générée à partir de ladite clé publique et dudit préfixe de sous-réseau, et un certificat signé par au moins une autorité de certification, ledit certificat incluant ladite clé publique et un nom de propriétaire de la paire de clés publique et privée, procède à l'authentification dudit hôte mobile sollicitant l'accès au réseau de communication, en vérifiant ladite signature numérique et ladite adresse IP à l'aide de la clé publique reçue dans le certificat.

10. Procédé selon la revendication 9 pour un réseau IP version 6, dans lequel lesdits messages sont conformes au standard ICMPv6.

## Claims

1. Access device (E_{A}) to a communication network (N), equipped with a radio communication interface (I_{R}) capable of exchanging data packets with mobile hosts (H1 H₂, H₃) located within a geographic zone (Z) associated with said interface (I_{R}), negotiation means (MN) provided to establish a data packet exchange (RA, NS, NA) with a mobile host in said geographic zone requesting access to said communication network, and transmission means (MT) for transmitting data packets forming a data stream (F), between one or more remote devices (E_{D}) located within said communication network and said mobile hosts recorded in a list of authorized mobile hosts (ACL) saved within said access device, said transmission means transmitting no data packets from or to the mobile hosts which are not recorded in said list of authorized mobile hosts, said negotiation means comprising control means (MC) capable of editing said list of authorized mobile hosts depending on an authentication of said mobile host, **characterized in that** said negotiation means are capable of transmitting an announce message (RA) to said mobile host, said announce message containing at least one subnetwork prefix, of receiving from said mobile host a request message (NS) containing a digital signature obtained with the assistance of the private key associated with a public key, an IP address of the mobile host generated from said public key and from said subnetwork prefix, and a certificate signed by at least one certification authority, said certificate including said public key and an owner name of the public-private keys pair, said control means (MC) being capable of verifying the digital signature of the certification authority, then of verifying the digital signature and IP address of the mobile host with the assistance of the public key received in the certificate to authenticate said mobile host.

2. An access device according to the preceding claim, wherein said list of authorized mobile hosts is an ACL database.

3. An access device according to claim 1 or 2, wherein said negotiation means are capable of transmitting an announce message (NA) to said mobile host containing the status of said authentication.

4. An access device according to claim 3, wherein the authentication status contained within the announce message exhibits a first value if the certificate is accepted by the access device, a second value if the certificate could not be evaluated by the access device, and a third value if the certificate is refused by the access device.

5. An access device according to one of the claims 1 to 4, wherein said request message comprises reduced information encrypted by the private key of said certification authority and said reduced information unencrypted, said control means being capable of using the public key of said certification authority to decrypt the encrypted reduced messages and compare the decrypted reduced information to said unencrypted reduced information.

6. An access device according to one of the claims 1 to 5, wherein said control means (MC) are capable of determining whether said at least one certification authority that signed said certificate is a trusted third party recognized by said access device, and to refuse said authentication if it is not.

7. An access device according to one of the claims 1 to 6, wherein said IP address is obtained by the CGA procedure according to RFC 3972.

8. An access device according to one of the claims 1 to 7 for an IP network version 6, wherein said messages are compliant with the standard ICMPv6.

9. A method for controlling the access of mobile hosts (H₁, H₂, H₃) to a communication network (N) by means of an access device (E_{A}) equipped with a radio communication interface (I_{R}) capable of exchanging data packets with one of said mobile hosts whenever that mobile host is located within a geographic zone (Z) associated with said access device (E_{A}), said method comprising a step of exchanging data packets (RA, NS, NA) between said access device and a mobile host requesting access to the communication network, a step of authenticating said mobile host, a step of modifying, depending on that authentication, a list of authorized mobile hosts saved within said access device, and a step of transmission consisting of transmitting data packets forming data streams (F) by said access device between one or more remote devices (E₀) located within said communication network and said mobile hosts if and only if they had previously been saved in said list of authorized mobile hosts (ACL), **characterized in that**, prior to said step of transmission, the access device transmits an announce message (RA) to said mobile host, said announce message containing at least one subnetwork prefix, receives from said mobile host a request message (NS) containing a digital signature obtained using a private key associated with a public key, an IP address generated from said public key and from said subnetwork prefix, and a certificate signed by at least one certification authority, said certificate including said public key and an owner name of the pair of public and private keys, carries out the authentication of said mobile host requesting access to the communication network, by verifying said digital signature and said IP address with the assistance of the public key received in the certificate.

10. A method according to claim 9 for an IP network version 6, wherein said messages are compliant with the ICMPv6 standard.

## Patentansprüche

1. Endgerät für den Zugang (E_{A}) zu einem Kommunikationsnetz (N), ausgestattet mit einer Funkkommunikationsschnittstelle (I_{R}), welche dazu ausgelegt ist, Datenpakete mit einem mobilen Host (H₁, H₂, H₃), welcher sich in einer der besagten Schnittstelle (I_{R}) zugeordneten geografischen Zone (Z) befindet, auszutauschen, mit Verhandlungsmitteln (MN), welche dafür vorgesehen sind, einen Austausch von Datenpaketen (RA, NS, NA) mit einem mobilen Host der besagten geografischen Zone, welcher den Zugang zu dem besagten Kommunikationsnetz anfordert, herzustellen, und mit Übertragungsmitteln (MT) zum Übertragen der einen Datenfluss (F) bildenden Datenpakete zwischen einem oder mehreren entfernten Endgeräten (E_{D}), welche sich in dem besagten Kommunikationsnetz befinden, und den in einer in dem besagten Zugangsgerät gespeicherten Liste der autorisierten mobilen Hosts (ACL) eingetragenen mobilen Hosts, wobei die besagten Übertragungsmittel keine Datenpakete von oder an nicht in der besagten Liste der autorisierten mobilen Hosts eingetragene(n) mobile(n) Hosts übertragen, wobei die besagten Verhandlungsmittel Steuermittel (MC) umfassen, welche dazu ausgelegt sind, die besagte Liste der autorisierten mobilen Hosts gemäß einer Authentifizierung des besagten mobilen Hosts zu ändern, **dadurch gekennzeichnet, dass** die besagten Verhandlungsmittel dazu ausgelegt sind, eine Benachrichtigung (RA) an den besagten mobilen Host zu senden, wobei die besagte Benachrichtigung mindestens ein Teilnetz-Präfix enthält, von dem besagten mobilen Host eine Aufforderungsnachricht (NS) zu empfangen, welche eine anhand eines einem öffentlichen Schlüssel zugeordneten privaten Schlüssels erhaltene digitale Signatur, eine anhand des besagten öffentlichen Schlüssels und des besagten Teilnetz-Präfix erzeugte IP-Adresse des mobilen Hosts und ein von mindestens einer Zertifizierungsstelle signiertes Zertifikat enthält, wobei das besagte Zertifikat den besagten offiziellen Schlüssel und den Namen eines Inhabers des öffentlichen und privaten Schlüsselpaars enthält, wobei die besagten Steuermittel (MC) dazu ausgelegt sind, die digitale Signatur der Zertifizierungsstelle zu überprüfen und anschließend anhand des im Zertifikat empfangenen öffentlichen Schlüssels die digitale Signatur und die IP-Adresse des mobilen Hosts zu überprüfen, um den besagten mobilen Host zu authentifizieren.

2. Zugangsgerät nach dem vorstehenden Anspruch, wobei die besagte Liste der autorisierten mobilen Hosts eine Datenbank vom Typ ACL ist.

3. Zugangsgerät nach Anspruch 1 oder 2, wobei die besagten Verhandlungsmittel dazu ausgelegt sind, eine Benachrichtigung (NA), welche den Status der besagten Authentifizierung enthält, an den besagten mobilen Host zu übertragen.

4. Zugangsgerät nach Anspruch 3, wobei der in der Benachrichtigung enthaltene Status der Authentifizierung einen ersten Wert aufweist, wenn das Zertifikat von dem Zugangsgerät akzeptiert wird, und einen zweiten Wert aufweist, wenn das Zertifikat von dem Zugangsgerät nicht bewertet werden konnte, und einen dritten Wert aufweist, wenn das Zertifikat von dem Zugangsgerät abgelehnt wird.

5. Zugangsgerät nach einem der Ansprüche 1 bis 4, wobei die besagte Aufforderungsnachricht von dem privaten Schlüssel der besagten Zertifizierungsstelle verschlüsselte reduzierte Informationen und die besagten nicht verschlüsselten reduzierten Informationen enthält, wobei die besagten Steuermittel dazu ausgelegt sind, den besagten öffentlichen Schlüssel der besagten Zertifikationsstelle zu verwenden, um die verschlüsselten reduzierten Informationen zu entschlüsseln und die entschlüsselten reduzierten Informationen mit den besagten nicht verschlüsselten reduzierten Informationen zu vergleichen.

6. Zugangsgerät nach einem der Ansprüche 1 bis 5, wobei die besagten Steuermittel (MC) dazu ausgelegt sind, zu ermitteln, ob die besagte mindestens eine Zertifizierungsstelle, welche das besagte Zertifikat signiert hat, ein von dem besagten Zugangsgerät erkannter vertrauenswürdiger Dritter ist und anderenfalls die besagte Authentifizierung zu verweigern.

7. Zugangsgerät nach einem der Ansprüche 1 bis 6, wobei die besagte IP-Adresse unter Anwendung des CGA-Verfahrens nach RFC 3972 erhalten wird.

8. Zugangsgerät nach einem der Ansprüche 1 bis 7 für ein IP-Netz Version 6, wobei die besagten Nachrichten dem ICMPv6-Standard entsprechen.

9. Verfahren zur Steuerung des Zugangs von mobilen Hosts (H₁, H₂, H₃) zu einem Kommunikationsnetz (N) über ein Zugangsgerät (E_{A}) mit einer Funkkommunikationsschnittstelle (I_{R}), welche dazu ausgelegt ist, Datenpakete mit einem der besagten mobilen Hosts auszutauschen, wenn dieser sich in einer dem besagten Zugangsgerät (E_{A}) zugeordneten geografischen Zone (Z) befindet, wobei das besagte Verfahren einen Schritt des Austauschens von Datenpaketen (RA, NS, NA) zwischen dem besagten Zugangsgerät und einem mobilen Host, welcher den Zugang zum Kommunikationsnetz anfordert, einen Schritt des Authentifizierens des besagten mobilen Hosts, einen Schritt des Änderns einer in dem besagten Zugangsgerät gespeicherten Liste der autorisierten mobilen Hosts gemäß dieser Authentifizierung, und einen Schritt des Übertragens, welcher darin besteht, Datenflüsse (F) bildende Datenpakete durch das besagte Zugangsgerät zwischen einem oder mehreren entfernten Endgeräten (E₀), welche sich in dem besagten Kommunikationsnetz befinden, und den besagten mobilen Hosts zu übertragen, wenn, und nur wenn diese zuvor in der besagten Liste der autorisierten mobilen Hosts (ACL) eingetragen wurden, umfasst, **dadurch gekennzeichnet, dass** das Zugangsgerät vor dem besagten Schritt des Übertragens eine Benachrichtigung (RA) an den besagten mobilen Host sendet, wobei die besagte Benachrichtigung mindestens ein Teilnetz-Präfix enthält, von dem besagten mobilen Host eine Aufforderungsnachricht (NS), welche eine anhand eines einem öffentlichen Schlüssel zugeordneten privaten Schlüssels erhaltene digitale Signatur enthält, eine anhand des besagten öffentlichen Schlüssels und des besagten Teilnetz-Präfix erzeugte IP-Adresse und ein von mindestens einer Zertifizierungsstelle signiertes Zertifikat empfängt, wobei das besagte Zertifikat den besagten öffentlichen Schlüssel und den Namen des Inhabers des öffentlichen und privaten Schlüsselpaars enthält, und die Authentifizierung des besagten mobilen Hosts, welcher den Zugang zu dem Kommunikationsnetz anfordert, vornimmt, indem es anhand des im Zertifikat empfangenen öffentlichen Schlüssels die besagte digitale Signatur und die besagte IP-Adresse überprüft.

10. Verfahren nach Anspruch 9 für ein IP-Netz Version 6, wobei die besagten Nachrichten dem ICMPv6-Standard entsprechen.
